# EUROPÄISCHE PATENTSCHRIFT

(11) **EP 2 820 508 B1**
(45) Veröffentlichungstag und Bekanntmachung des Hinweises auf die Patenterteilung: **14.12.2016**
(21) Anmeldenummer: 13732559.3
(22) Anmeldetag: 01.07.2013
(51) Int. Cl.: G06F 1/32, G06F 1/30

(54) **COMPUTERSYSTEM UND VERFAHREN ZUM BETRIEB EINES COMPUTERSYSTEMS**
COMPUTER SYSTEM AND METHOD FOR OPERATING A COMPUTER SYSTEM
SYSTÈME INFORMATIQUE ET PROCÉDÉ PERMETTANT DE FAIRE FONCTIONNER UN SYSTÈME INFORMATIQUE

(30) Priorität: 04.07.2012 DE 102012105986
(43) Veröffentlichungstag der Anmeldung: 07.01.2015
(73) Patentinhaber: Fujitsu Technology Solutions Intellectual Property GmbH, 80807 München (DE)
(72) Erfinder: BELJAEV, Sergej, 86179 Augsburg (DE); ZIESSLER, Thorsten, 86415 Mering (DE)
(74) Vertreter: Epping - Hermann - Fischer
(86) Internationale Anmeldenummer: PCT/EP2013/063831
(87) Internationale Veröffentlichungsnummer: WO 2014/005995

(56) Entgegenhaltungen:
- EP-A2- 1 321 845
- US-A1- 2009 207 423
- US-A1- 2012 117 364

## Beschreibung

Die Erfindung betrifft ein Computersystem aufweisend ein Netzteil zur Umwandlung einer primären Versorgungsspannung in wenigstens eine sekundäre Betriebsspannung und wenigstens eine sekundäre Bereitschaftsspannung sowie eine Systemkomponente umfassend wenigstens einen Prozessor. Das Computersystem ist dazu eingerichtet, in einem ersten Betriebszustand den wenigstens einen Prozessor mit der wenigstens einen sekundären Betriebsspannung zu versorgen.

Zum Stand der Technik gehört der von den Firmen Hewlett Packard Corporation, Intel Corporation, Microsoft Corporation, Phoenix Technologies Ltd. und der Toshiba Corporation entwickelte Industriestandard "Advanced Configuration and Power Interface Specification", kurz ACPI (Stand 6. Dezember 2011), der unter anderem verschiedene Betriebszustände eines Computersystems beschreibt. So bezeichnet der Zustand S0 einen Arbeitszustand, die Zustände S1 bis S4 verschiedene Schlafzustände des Systems und der Zustand S5 einen sogenannten Soft-off- oder Bereitschaftszustand. Durch das Einnehmen eines Zustandes mit geringer Leistungsaufnahme, wie zum Beispiel den Schlafzuständen oder dem Bereitschaftszustand, ist es dem Computersystem möglich, Energie zu sparen.

Die US 2012/0117364 A1 beschreibt ein Betriebsverfahren für einen Taschenrechner mit einem kontrollierbaren Leistungsbereich. Das Verfahren umfasst das Empfangen eines Signals zum Herunterfahren, das Speichern von Kontext Informationen wenigstens einer Komponente des kontrollierbaren Leistungsbereichs in einen externen Speicher und das Setzen eines Boot-Indikators um einen Schnellstart beim Einschalten anzuzeigen. Das Verfahren umfasst des Weiteren sind das wegnehmen von Leistung von dem kontrollierbaren Leistungsbereich.

Aus der US 2009/0207423 A1 ist ein Informationsverarbeitungsgerät bekannt, das mehrere arithmetische Einheiten und mehrere Speichereinheiten aufweist und bei dem ein Leistungsverbrauch in einem Energiesparzustand reduziert wird. Des Weiteren wird eine Rückkehrzeit von dem Energiesparzustand in einen normalen Zustand reduziert.

Aufgabe der vorliegenden Erfindung ist es, ein Computersystem zu beschreiben, dessen Energieeffizienz gegenüber bekannten Systemen noch weiter verbessert ist.

Gemäß einem ersten Aspekt der Erfindung wird ein Computersystem beschrieben, das ein Netzteil zur Umwandlung einer primären Versorgungsspannung in wenigstens eine sekundäre Betriebsspannung und wenigstens eine sekundäre Bereitschaftsspannung, eine Systemkomponente umfassend wenigstens einen Prozessor, einen Mikrocontroller und einen mit dem Mikrocontroller funktionsfähig verbundenen Speicher zum Speichern von Informationen über eine Unterbrechung wenigstens einer Betriebsspannung des Computersystems aufweist. Der Speicherinhalt zeigt an, ob eine Unterbrechung der sekundären Betriebs- und Bereitschaftsspannung beabsichtigt war oder ob es sich um eine unbeabsichtigte Unterbrechung der sekundären Betriebs- und Bereitschaftsspannung handelt. Das Computersystem ist dazu eingerichtet, in einem ersten Betriebszustand den wenigstens einen Prozessor mit der wenigstens einen sekundären Betriebsspannung zu versorgen. Des Weiteren ist das Computersystem dazu eingerichtet, in einem zweiten Betriebszustand den wenigstens einen Prozessor von der wenigstens einen sekundären Betriebsspannung zu trennen und den Mikrocontroller mit der wenigstens einen sekundären Bereitschaftsspannung zu versorgen. In einem dritten Betriebszustand ist das Computersystem dazu eingerichtet, sowohl den wenigstens einen Prozessor und den Mikrocontroller von der Betriebsspannung bzw. der Bereitschaftsspannung zu trennen. Der Mikrocontroller ist dazu eingerichtet, beim Anlegen der wenigstens einen sekundären Bereitschaftsspannung an den Mikrocontroller die Informationen über die Unterbrechung wenigstens einer Betriebsspannung des Computersystems aus dem Speicher auszulesen und das Computersystem in Abhängigkeit der ausgelesenen Informationen bei einer beabsichtigten Unterbrechung mit dem Erfassen eines nachfolgenden Einschaltsignals in den ersten Betriebszustand zu schalten und der Mikrocontroller dazu eingerichtet ist, bei einer unbeabsichtigten Unterbrechung eine Speicherabfrage durchzuführen, welcher Betriebszustand als nächstes eingenommen werden soll.

Durch das Auslesen der Informationen über die Unterbrechung wenigstens einer Betriebsspannung des Computersystems durch den Mikrocontroller wird es möglich unterschiedliche Gründe für die Unterbrechung einer primären Versorgungsspannung, der sekundären Betriebsspannung und/oder der sekundären Bereitschaftsspannung zu ermitteln. Hierdurch kann beim Wiederanlegen einer Bereitschaftsspannung auf eine gegebenenfalls unnötige Stromversorgung des Prozessors in dem ersten Betriebszustand verzichtet werden. Durch das Vermeiden des Startens des Prozessors, beispielsweise zum Ausführen von BIOS-Programmcode zur Auswahl eines Betriebszustands für das Computersystem, wird eine Energieeinsparung erreicht.

In einer vorteilhaften Ausgestaltung umfasst der Speicher eine bistabile Kippstufe, die von dem Netzteil in dem ersten, zweiten und dritten Betriebszustand mit einer Erhaltungsspannung versorgt wird. Dabei zeigt ein erster Zustand der bistabilen Kippstufe an, dass das Computersystem eine Unterbrechung der sekundären Bereitschaftsspannung erfahren hat. Ein Vorteil dieser Ausführung ist, dass sie
einfach mit Hilfe einer diskreten Schaltung realisiert werden kann.

Weiter ist es vorgesehen, dass die bistabile Kippstufe nach einer Unterbrechung einer Erhaltungsspannung einen vorbestimmten zweiten Zustand einnimmt, wobei der zweite Zustand der bistabilen Kippstufe anzeigt, dass das Computersystem eine Unterbrechung der primären Versorgungsspannung erfahren hat. Hierdurch ist es dem Mikrocontroller möglich, eine Unterbrechung der primären Versorgung als solche zu erkennen und von einer beabsichtigten Unterbrechung der sekundären Bereitschaftsspannung des Mikrocontrollers zu unterscheiden.

In einer alternativen Ausgestaltung ist der Speicher ein nichtflüchtiger Speicher, wie zum Beispiel ein Flash- oder ein EEPROM-Speicher und somit fähig, Informationen auch nach einer Unterbrechung der primären Betriebsspannung oder über einen sonstigen Energieausfall hinweg zu speichern.

Gemäß einer weiteren vorteilhaften Ausführung ist das Computersystem dadurch gekennzeichnet, dass das Computersystem des Weiteren einen nichtflüchtigen Speicherbaustein zum Speichern von ausführbarem Programmcode aufweist. Dabei umfasst der Programmcode eine Routine zur Auswahl eines einer Mehrzahl von möglichen Betriebszuständen des Computersystems. Durch diese Ausgestaltung ist das System in der Wahl unterschiedlicher Zustände besonders flexibel.

Ein weiterer Aspekt der Erfindung umfasst ein Verfahren zum Betrieb eines Computersystems, aufweisend wenigstens einen Prozessor, einen Mikrocontroller und einen Speicher, wobei das Computersystem dazu eingerichtet ist, in einem ersten Betriebszustand den wenigstens einen Prozessor mit der wenigstens einen sekundären Betriebsspannung zu versorgen und des Weiteren dazu eingerichtet ist, in einem zweiten Betriebszustand den wenigstens einen Prozessor von der wenigstens einen sekundären Betriebsspannung zu trennen und den Mikrocontroller mit der wenigstens einen sekundären Bereitschaftsspannung zu versorgen. Darüber hinaus ist das Computersystem dazu eingerichtet, einen dritten Betriebszustand anzunehmen, in dem der wenigstens eine Prozessor von der wenigstens einen sekundären Betriebsspannung und der Mikrocontroller von der wenigstens einen Bereitschaftsspannung getrennt sind. Das Verfahren umfasst wenigstens die Schritte:
- Speichern von Informationen über eine Unterbrechung wenigstens einer Betriebsspannung des Computersystems, wobei ein Speicherinhalt anzeigt, ob eine Unterbrechung der sekundären Betriebs- und Bereitschaftsspannung beabsichtigt war oder ob es sich um eine unbeabsichtigte Unterbrechung der sekundären Betriebs- und Bereitschaftsspannung handelt,
- Erkennen, dass wenigstens eine sekundäre Bereitschaftsspannung an den Mikrocontroller angelegt wurde,
- Auslesen der Informationen über die Unterbrechung wenigstens einer Betriebsspannung des Computersystems durch den Mikrocontroller,
- Schalten des Computersystems wahlweise in den ersten Betriebszustand abhängig von den von dem Mikrocontroller aus dem Speicher ausgelesenen Informationen, wobei das
- Computersystem bei einer beabsichtigten Unterbrechung mit dem Erfassen eines nachfolgenden Einschaltsignals in den ersten Betriebszustand geschaltet wird und bei einer unbeabsichtigten Unterbrechung eine Speicherabfrage durch den Mikrocontroller durchgeführt wird, welcher Betriebszustand als nächstes eingenommen werden soll..

Hierbei liegt ein Vorteil des Verfahrens darin, in Abhängigkeit einer Auswertung der gespeicherten Informationen durch den Mikrocontroller, eine beabsichtigte von einer unbeabsichtigten Unterbrechung einer Betriebsspannung zu unterscheiden ohne einen ersten Betriebszustand einzunehmen. Durch das Verbleiben in dem zweiten Zustand kann im Vergleich zu einem Wechsel in einen ersten Betriebszustand Energie eingespart werden.

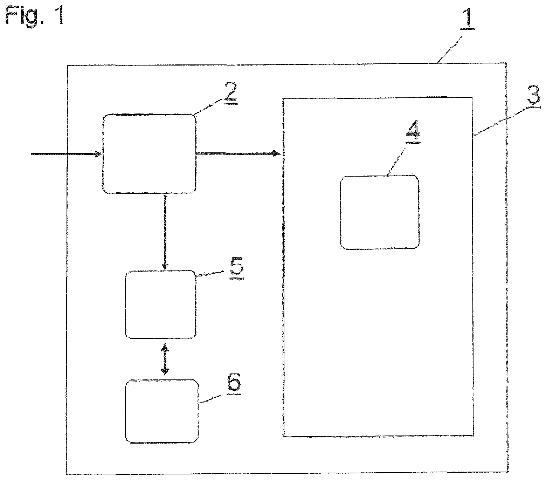

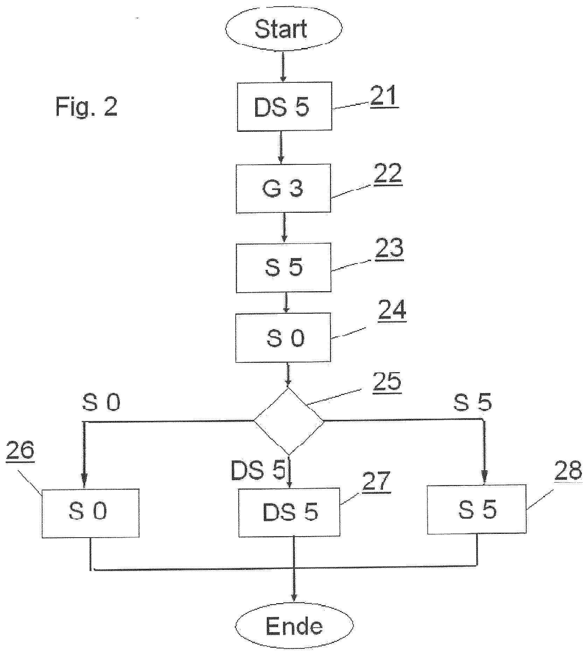

Unterschiedliche Ausführungsbeispiele der Erfindung werden nachfolgend unter Bezugnahme auf die angehängten Figuren beschrieben. In den Figuren zeigen: Figur 1 ein Blockdiagramm eines Computersystems, Figur 2 ein Ablaufdiagramm eines möglichen Startvorgangs eines Computersystems,

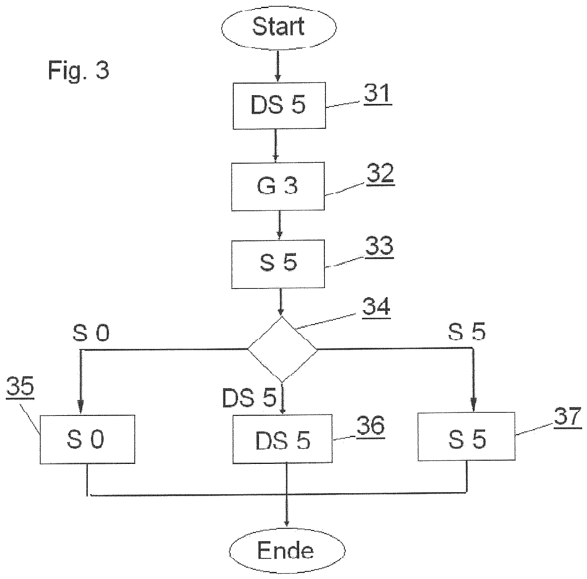

- Figur 3: ein Ablaufdiagramm eines Startvorgangs eines Computersystems gemäß einer Ausgestaltung der Erfindung.

Das Blockdiagramm gemäß Figur 1 zeigt schematisch ein Computersystem 1. Das Computersystem 1 umfasst im dargestellten Ausführungsbeispiel ein Netzteil 2 sowie eine Systemkomponente 3. Die Systemkomponente 3 umfasst einen Prozessor 4. Das Computersystem 1 umfasst des Weiteren einen Mikrocontroller 5 und einen Speicher 6. Obwohl die Komponenten 5 und 6 in der Figur 1 als eigenständige Bauteile dargestellt sind, können sie selbstverständlich auch in das Netzteil 2 oder die Systemkomponente 3 integriert werden.

Das Netzteil 2 nimmt eine primäre Versorgungsspannung in Form einer Netzwechselspannung auf und wandelt diese in eine oder mehrere sekundäre Betriebsspannungen um. Insbesondere erzeugt es eine erste Betriebsspannung für die Systemkomponente 3 und den darauf angeordneten Prozessor 4 und eine zweite Betriebsspannung für den Mikrocontroller 5. Die zweite Betriebsspannung wird von dem Netzteil 2 auch in einem Bereitschaftszustand, beispielsweise dem ACPI-Zustand S5, bereitgestellt und daher im Folgenden als Bereitschaftsspannung bezeichnet. Der Mikrocontroller 5 und der Speicher 6 sind derart verbunden, dass sie Daten austauschen können beziehungsweise der Mikrocontroller 5 Daten in dem Speicher 6 speichern und Daten aus dem Speicher 6 abrufen kann.

Beispielsweise handelt es sich bei dem Speicher 6 um eine Flip-Flop-Schaltung die mit einem programmierbaren Eingabe-/Ausgabeanschluss des Mikrocontrollers 5 verbunden ist. Die Flip-Flop-Schaltung wird dabei von dem Netzteil 2 oder einer anderen Energiequelle, wie beispielsweise einer sogenannten BIOS-Batterie, stets, also in allen Betriebszuständen, mit einer Spannung zur Erhaltung des Speicherinhalts versorgt. In einer alternativen Ausführung ist der Speicher 6 als nichtflüchtiger Speicherbaustein ausgeführt, der über eine oder mehrere Busleitungen mit dem Mikrocontroller 5 verbunden ist.

Erfährt das Computersystem 1 eine Unterbrechung der sekundären Betriebsspannung und wird nachfolgend eine Bereitschaftsspannung an den Mikrocontroller 5 angelegt, so kann dieser die vorübergehende Unterbrechung der Betriebsspannung erkennen und liest aus dem Speicher 6 Informationen über die Unterbrechung der Betriebsspannung aus. Eine Unterbrechung der Betriebsspannung kann beispielsweise durch ein gewünschtes Abschalten des Computersystems 1, durch ein Ziehen des Netzsteckers oder mechanisches Abschalten des Netzteils 2 oder eine netzseitige Störung der primären Versorgungsspannung verursacht werden. Auf Grundlage der ausgelesenen Informationen kann der Mikrocontroller 5 die Ursache der Unterbrechung bestimmen und kann das Computersystem 1 daraufhin wahlweise in einen ersten oder einen anderen Betriebszustand versetzen.

In der beschriebenen Ausgestaltung handelt es sich bei den unterschiedlichen Betriebszuständen um Betriebszustände mit unterschiedlichem Energieverbrauch des Computersystems 1. So entspricht der erste Betriebszustand, in welchem das gesamte Computersystem 1 mit einer Betriebsspannung versorgt wird, einem Betriebszustand mit hohem Energieverbrauch, der in dem ACPI-Standard als S0-Zustand bezeichnet wird. Bei dem zweiten Betriebszustand handelt es sich um einen energetisch günstigeren Betriebszustand des Computersystems 1, bei dem nur ausgewählte Komponenten wie beispielsweise der Mikrocontroller 5 und der Speicher 6 mit einer Bereitschaftsspannung versorgt werden und andere Komponenten des Computersystems 1 wie der Prozessor 4 von einer Betriebsspannung getrennt sind. In diesem Zustand können auch weitere Komponenten, wie beispielsweise eine Netzwerkkarte oder ein Echtzeitbaustein mit der Bereitschaftsspannung versorgt werden, um ein Aufwecken des Computersystems 1 aus dem Bereitschaftszustand zu ermöglichen. Bei diesem Betriebszustand kann es sich beispielsweise um den ACPI-Zustand S5 handeln. In einem weiteren Betriebszustand, einem sogenannten Tiefschlafzustand, der außerhalb der genannten ACPI-Spezifikation liegt, ist fast das gesamte Computersystem 1 von einer Betriebsspannung getrennt. Lediglich der Speicher 6, sofern er ein flüchtiger Speicher ist, und gegebenenfalls eine Überwachungsschaltung für einen Einschalttaster werden von dem Netzteil 2 mit einer Erhaltungsspannung versorgt.

In der beschriebenen Ausgestaltung umfasst der Speicher 6 eine bistabile Kippstufe, wobei ein Zustand der bistabilen Kippstufe anzeigt, dass das Computersystem 1 eine Unterbrechung der primären Versorgungsspannung, die im ACPI-Standard als G3 bezeichnet wird, erfahren hat, ohne dass dies von dem Computersystem 1 initiiert wurde. In dieser Ausführung ist der Speicher 6 mit dem Netzteil 2 verbunden und das Netzteil 2 dazu eingerichtet, den Speicher 6 sowohl in dem ersten Betriebszustand, dem zweiten Betriebszustand als auch in dem dritten Betriebszustand mit einer Erhaltungsspannung zu versorgen. Die bistabile Kippstufe nimmt nach einer Unterbrechung der Erhaltungsspannung einen zurückgesetzten Zustand ein, wobei der zurückgesetzte Zustand der bistabilen Kippstufe anzeigt, dass die primäre Stromversorgung zu dem Netzteil 2 unterbrochen wurde.

Beispielsweise zeigt eine Schaltung mit der bistabilen Kippstufe bei Bereitstellung der Bereitschaftsspannung eine Unterbrechung der primären Versorgungsspannung (englisch: "AC-Fail") an. Die Unterbrechung der primären Spannung wird beispielsweise erkannt, wenn die sekundäre Betriebsspannung nicht mehr vorhanden ist obwohl die Systemkomponente 3 zuvor keine Abschaltung angezeigt hat oder wenn die Versorgungsspannung der bistabilen Kippstufe nicht mehr vorhanden ist. Dabei ist die erste Erkennung im ACPI-Zustand S0 aktiv und die zweite Erkennung wird für die Übergänge aus dem ACPI-Zustand S5 oder dem Tiefschlafzustand DS5 in den Zustand G3 verwendet.

Dadurch, dass der Speicher 6 auch im Tiefschlafzustand DS5 mit einer Erhaltungsspannung versorgt wird und der Speicher 6 Informationen zu einer Spannungsunterbrechung speichert, ist es dem Mikrocontroller 5 in der beschriebenen Ausführung der Erfindung möglich, im Betriebszustand S5 eine Auswahl 34 auszuführen, welche es dem Computersystem 1 erlaubt, einen von mehreren hinterlegten Betriebszuständen einzunehmen.

Zum besseren Verständnis der Erfindung werden anhand der Figuren 2 und 3 unterschiedliche Startverfahren einander gegenübergestellt.

Das in Figur 2 dargestellte Ablaufdiagramm beschreibt ein mögliches Vorgehen des Computersystems 1, welches in einem Tiefschlafzustand DS5 in Schritt 21 eine Unterbrechung der Betriebsspannung erfährt. Beispielsweise fällt die primäre Netzwechselspannung zur Versorgung des Netzteils 2 komplett aus. Dies entspricht dem ACPI-Zustand G3 (mechanisch aus), der in Schritt 22 eingenommen wird. Das Netzteil 2 stellt in diesem Fall weder die sekundäre Betriebsspannung noch die sekundäre Bereitschaftsspannung bereit.

Nach dem Wiederherstellen der primären Versorgungsspannung in Schritt 23 wird zunächst lediglich eine Bereitschaftsspannung für den Mikrocontroller 5 zur Verfügung gestellt. Aus diesem Bereitschaftszustand nimmt das Computersystem 1, beispielsweise gemäß einer BIOS-Voreinstellung, nun in Schritt 24 durch Bereitstellen der sekundären Versorgungsspannung des Prozessors 4 zumindest vorübergehend einen voll funktionsfähigen Betriebszustand S0 ein.

Erst in einem weiteren Schritt 25 im Betriebszustand S0 ist es möglich, eine Auswahl über die möglichen Betriebszustände zu treffen und in Abhängigkeit von in dem Speicherbereich der Firmware gespeicherten Informationen wahlweise im Schritt 27 in den Tiefschlafzustand DS5 zurückzukehren. Weitere Möglichkeiten für ein Beenden des Verfahrens sind das Verbleiben in einem voll funktionsfähigen Zustand S0 im Schritt 26 oder das Wechseln in den Bereitschaftszustand S5 in Schritt 28.

Figur 3 zeigt das Ablaufdiagramm eines Startvorgangs eines Computersystems 1 gemäß einer Ausgestaltung der Erfindung.

In der beschriebenen Ausgestaltung werden Informationen über eine Unterbrechung der wenigstens einen Versorgungsspannung bereits zuvor, beispielsweise in dem Tiefschlafzustand DS5, in Schritt 31 in einem Speicher 6 abgelegt. Entsprechende Informationen können beispielsweise bei einer beabsichtigten oder unbeabsichtigten Unterbrechung der sekundären Betriebsspannungen, also der Betriebsspannung des Prozessors 4, Bereitschaftsspannung, und/oder der Erhaltungsspannung gesetzt werden. Alternativ oder zusätzlich kann der Mikrocontroller nach einem Wiederherstellen der Bereitschaftsspannung feststellen, ob es ein Kommando aus der Systemkomponente 3 für eine Unterbrechung gab, wenn die bistabile Kippstufe eine Unterbrechung der Stromversorgung anzeigt.

Im Ausgangszustand des dargestellten Ablaufs befindet sich das Computersystem 1 in Schritt 31 in einem energiesparenden Tiefschlafzustand DS5 und erfährt nun eine Unterbrechung der Betriebsspannung, was in Schritt 32 zu einem automatischen Wechseln in den Betriebszustand G3 führt.

Nachdem die Betriebsspannung wiederhergestellt ist, stellt das Netzteil 2 in Schritt 33 zunächst nur die Bereitschaftsspannung für den Mikrocontroller 5 bereit. Das Computersystem 1 befindet sich hierfür zunächst in einem sogenannten Legacy-Zustand, der energetisch dem S5-Zustand ähnelt, wobei jedoch weder ein BIOS-Code noch ein Betriebssystem durch den Prozessor geladen wurde. Der Mikrocontroller 5 kann auf Grundlage der in dem Speicher 6 enthaltenen Informationen in diesem energiesparenden Zustand erkennen, dass eine Unterbrechung einer Spannungsversorgung stattgefunden hat. Beispielsweise zeigt der Speicherinhalt an, dass eine Unterbrechung der sekundären Betriebs- und Bereitschaftsspannungen beabsichtigt war, beispielsweise weil vor der Unterbrechung von der Systemkomponente 3 ein Wechsel in den Tiefschlafzustand DS5 signalisiert wurde. Bei der oben genannten Störung der primären Versorgungsspannung, würde der Speicherinhalt dagegen eine unbeabsichtigte Unterbrechung anzeigen.

Dementsprechend ist der Mikrocontroller 5 nun in der Lage, in Schritt 34 eine Abfrage durchzuführen, welcher Betriebszustand als nächstes eingenommen werden soll. Beispielsweise kann auf eine unbeabsichtigte Trennung der primären Versorgungsspannung gemäß einer BIOS-Voreinstellung reagiert werden. Beispielsweise kann ein zuvor verwendeter und gespeicherter Betriebszustand, wie insbesondere der Bereitschaftszustand S5 oder der Tiefschlafzustand DS5 erneut eingenommen werden. Bei einer beabsichtigen Unterbrechung mit dem Erfassen eines nachfolgenden Einschaltsignals (englisch: "power button request") wird dagegen anforderungsgemäß der Betriebszustand S0 eingenommen. Dabei sorgt der Mikrocontroller 5 dafür, dass der zuletzt verwendete oder gewünschte Zustand eingenommen wird; beispielsweise durch Erzeugen eines Aufwachereignisses zum Einnehmen des Betriebszustands S0 in Schritt 35, durch Beibehaltung des S5-Zustands oder durch ein Wechseln in den Betriebszustand DS5 in Schritt 36.

Das beschriebene Computersystem 1 bzw. der beschriebene Startvorgang stellen eine vorteilhafte Kombination eines energetisch besonders günstigen Tiefschlafzustands mit einem flexiblen Aufwachverhalten des Computers beim Wiederanlegen einer Betriebsspannung dar.

### Bezugszeichenliste

- 1: Computersystem
- 2: Netzteil
- 3: Systemkomponente
- 4: Prozessor
- 5: Mikrocontroller
- 6: Speicher

- 21 - 28: Verfahrensschritte
- 31 - 37: Verfahrensschritte

- S0: voll funktionsfähiger Betriebzustand
- S5: Bereitschaftszustand
- DS5: Tiefschlafzustand
- G3: mechanisch ausgeschalteter Zustand

## Patentansprüche

1. Computersystem (1), aufweisend:
- ein Netzteil (2) zur Umwandlung einer primären Versorgungsspannung in wenigstens eine sekundäre Betriebsspannung und wenigstens eine sekundäre Bereitschaftsspannung;
- eine Systemkomponente (3) umfassend wenigstens einen Prozessor (4);
- einen Mikrocontroller (5) und
- einen mit dem Mikrocontroller (5) funktionsfähig verbundenen Speicher (6) zum Speichern von Informationen über eine Unterbrechung wenigstens einer Betriebsspannung des Computersystems (1), wobei dessen Speicherinhalt anzeigt, ob eine Unterbrechung der sekundären Betriebs- und Bereitschaftsspannung beabsichtigt war oder ob es sich um eine unbeabsichtigte Unterbrechung der sekundären Betriebs- und Bereitschaftsspannung handelt;
wobei
- das Computersystem (1) dazu eingerichtet ist, in einem ersten Betriebszustand den wenigstens einen Prozessor (4) mit der wenigstens einen sekundären Betriebsspannung zu versorgen;
- das Computersystem (1) des Weiteren dazu eingerichtet ist, in einem zweiten Betriebszustand den wenigstens einen Prozessor (4) von der wenigstens einen sekundären Betriebsspannung zu trennen und den Mikrocontroller (5) mit der wenigstens einen sekundären Bereitschaftsspannung zu versorgen;
- das Computersystem (1) des Weiteren dazu eingerichtet ist, in einem dritten Betriebszustand den wenigstens einen Prozessor (4) von der wenigstens einen sekundären Betriebsspannung und den Mikrocontroller (5) von der wenigstens einen sekundären Bereitschaftsspannung zu trennen und
- der Mikrocontroller (5) dazu eingerichtet ist, beim Anlegen der wenigstens einen sekundären Bereitschaftsspannung an den Mikrocontroller (5) die Informationen über die Unterbrechung der wenigstens einen Betriebsspannung des Computersystems (1) aus dem Speicher (6) auszulesen und das Computersystem (1) in Abhängigkeit der ausgelesenen Informationen bei einer beabsichtigten Unterbrechung mit dem Erfassen eines nachfolgenden Einschaltsignals in den ersten Betriebszustand zu schalten und bei einer unbeabsichtigten Unterbrechung eine Speicherabfrage durchzuführen, welcher Betriebszustand als nächstes eingenommen werden soll.

2. Computersystem (1) nach Anspruch 1,
**gekennzeichnet dadurch, dass**
der erste Betriebszustand einem aktiven Zustand mit einer ersten Leistungsaufnahme, der zweite Betriebszustand einem Bereitschaftszustand mit einer gegenüber der ersten Leistungsaufnahme reduzierten zweiten Leistungsaufnahme und der dritte Betriebszustand einem Tiefschlafzustand mit einer gegenüber der zweiten Leistungsaufnahme reduzierten dritten Leistungsaufnahme entspricht.

3. Computersystem (1) nach Anspruch 1 oder 2,
**dadurch gekennzeichnet, dass**
der Speicher (6) eine bistabile Kippstufe umfasst, die von dem Netzteil (2) in dem ersten, zweiten und dritten Betriebszustand mit einer Erhaltungsspannung versorgt wird, wobei ein erster Zustand der bistabilen Kippstufe anzeigt, dass das Computersystem (1) eine Unterbrechung der sekundären Bereitschaftsspannung erfahren hat.

4. Computersystem (1) nach Anspruch 3,
**dadurch gekennzeichnet, dass**
die bistabile Kippstufe nach einer Unterbrechung der Erhaltungsspannung einen vorbestimmten zweiten Zustand einnimmt, wobei der zweite Zustand der bistabilen Kippstufe anzeigt, dass das Computersystem (1) eine Unterbrechung der primären Versorgungsspannung erfahren hat.

5. Computersystem (1) nach einem der Ansprüche 1 oder 2,
**dadurch gekennzeichnet, dass**
der Speicher (6) ein nichtflüchtiger Speicher, insbesondere ein Flash-Speicher oder ein EEPROM-Speicher, ist.

6. Computersystem (1) nach einem der Ansprüche 1 bis 5,
**dadurch gekennzeichnet, dass**
das Computersystem (1) des Weiteren einen nicht-flüchtigen Speicherbaustein zum Speichern von ausführbarem Programmcode aufweist, wobei der Programmcode eine Routine zur Auswahl eines einer Mehrzahl von möglichen Betriebszuständen des Computersystems (1) umfasst.

7. Verfahren zum Betrieb eines Computersystems, aufweisend wenigstens einen Prozessor (4), einen Mikrocontroller (5) und einen Speicher (6), wobei das Computersystem (1) dazu eingerichtet ist, in einem ersten Betriebszustand den wenigstens einen Prozessor (4) mit wenigstens einer sekundären Betriebsspannung zu versorgen, in einem zweiten Betriebszustand den wenigstens einen Prozessor (4) von der wenigstens einen sekundären Betriebsspannung zu trennen und den Mikrocontroller (5) mit wenigstens einer sekundären Bereitschaftsspannung zu versorgen und in einem dritten Betriebszustand den wenigstens einen Prozessor (4) von der wenigstens einen sekundären Betriebsspannung und den Mikrocontroller (5) von der wenigstens einen sekundären Bereitschaftsspannung zu trennen, wobei das Verfahren wenigstens die folgenden Schritte umfasst:
- Speichern von Informationen über eine Unterbrechung wenigstens einer Betriebsspannung des Computersystems (1), wobei ein Speicherinhalt anzeigt, ob eine Unterbrechung der sekundären Betriebs- und Bereitschaftsspannung beabsichtigt war oder ob es sich um eine unbeabsichtigte Unterbrechung der sekundären Betriebs- und Bereitschaftsspannung handelt;
- Erkennen, dass wenigstens eine sekundäre Bereitschaftsspannung an einen Mikrocontroller (5) angelegt wurde;
- Auslesen der Informationen über die Unterbrechung der wenigstens einer Betriebsspannung des Computersystems (1) durch den Mikrocontroller (5) und
- Schalten des Computersystems (1) wahlweise in den ersten Betriebszustand abhängig von den von dem Mikrocontroller (5) aus dem Speicher (6) ausgelesenen Informationen, wobei das Computersystem bei einer beabsichtigten Unterbrechung mit dem Erfassen eines nachfolgenden Einschaltsignals in den ersten Betriebszustand geschaltet wird und bei einer unbeabsichtigten Unterbrechung eine Speicherabfrage durch den Mikrocontroller durchgeführt wird, welcher Betriebszustand als nächstes eingenommen werden soll.

## Claims

1. A computer system (1) comprising:
- a power supply unit (2) to convert a primary supply voltage into at least one secondary operating voltage and at least one secondary standby voltage;
- a system component (3) comprising at least one processor (4);
- a microcontroller (5) and
- a memory (6) functionally connected to the microcontroller (5) to store information about an interruption of at least one operating voltage of the computer system (1), wherein its memory content indicates if an interruption of the secondary operating and standby voltage was intended or if it is an unintended interruption of the secondary operation and standby voltage;
wherein
- the computer system (1) is configured, in a first operating state, to supply the at least one processor (4) with the at least one secondary operating voltage;
- the computer system (1) is furthermore configured, in a second operating state, to separate the at least one processor (4) from the at least one secondary operating voltage and to supply the microcontroller (5) with the at least one secondary standby voltage;
- the computer system (1) is furthermore configured, in a third operating state, to separate the at least one processor (4) from the at least one secondary operating voltage and to separate the microcontroller (5) from the at least one secondary standby voltage, and
- the microcontroller (5) is configured to read out the information about the interruption of the at least one operating voltage of the computer system (1) from the memory (6) when the at least one secondary standby voltage is applied to the microcontroller (5) and, in the case of an intended interruption, to switch the computer system (1), dependent on the information readout, to the first operating state upon detection of a subsequent start-up signal and to perform a memory request in the case of an unintended interruption as to which operating state is to be assumed next.

2. The computer system (1) according to claim 1,
**characterized in that**
the first operating state corresponds to an active state with a first power consumption, the second operating state corresponds to a standby state with a second power consumption reduced compared to the first power consumption and the third operating state corresponds to a deep sleep state with a reduced third power consumption compared to the second power consumption.

3. The computer system (1) according to claims 1 or 2,
**characterized in that**
the memory (6) comprises a bistable trigger circuit, which is supplied with a sustain voltage from the power supply unit (2) in the first, second and third operating state, wherein a first state of the bistable trigger circuit indicates that the computer system (1) has experienced an interruption of the secondary standby voltage.

4. The computer system (1) according to claim 3,
**characterized in that**
the bistable trigger circuit, after an interruption of the sustain voltage, assumes a predetermined second state, wherein the second state of the bistable trigger circuit indicates that the computer system (1) has experienced an interruption of the primary supply voltage.

5. The computer system (1) according to one of claims 1 or 2,
**characterized in that**
the memory (6) is a nonvolatile memory, in particular a flash-memory or an EEPROM-memory.

6. The computer system (1) according to one of claims 1 to 5,
**characterized in that**
the computer system (1) furthermore comprises a nonvolatile memory chip to store an executable program code, wherein the program code comprises a routine for the selection of one of a plurality of possible operating states of the computer system (1).

7. A method for operating a computer system, comprising at least one processor (4), one microcontroller (5) and one memory (6), wherein the computer system (1) is configured, in a first operating state, to supply the at least one processor (4), with at least one secondary operating voltage, to separate the at least one processor (4), in a second operating state, from the at least one secondary operating voltage and to supply the microcontroller (5) with at least one secondary standby voltage, and in a third operating state, to separate the at least one processor (4) from the at least one secondary operating voltage and to separate the microcontroller (5) from the at least one secondary standby voltage, wherein the method at least comprises the following steps:
- storing information about an interruption of at least one operating voltage of the computer system (1), wherein a memory content indicates if an interruption of the secondary operating and standby voltage was intended or if it is an unintended interruption of the secondary operating and standby voltage;
- recognizing that at least one secondary standby voltage was applied to a microcontroller (5);
- reading out the information about the interruption of the at least one operating voltage of the computer system (1) by the microcontroller (5), and
- selectively switching the computer system (1) to the first operating state dependent on the information readout from the memory (6) by the microcontroller (5), wherein the computer system is switched to the first operating state in the case of an intended interruption upon detection of a subsequent start-up signal and a memory request as to which operating state is to be assumed next is performed by the microcontroller in the case of an unintended interruption.

## Revendications

1. Un système informatique (1) comprenant:
- une alimentation électrique (2) pour convertir une tension d'alimentation primaire en au moins une tension de fonctionnement secondaire et au moins une tension de veille secondaire;
- un composant de système (3) comprenant au moins un processeur (4);
- un microcontrôleur (5) et
- une mémoire (6) reliée de façon fonctionnelle au microcontrôleur (5) pour stocker des informations concernant une interruption d'au moins une tension de fonctionnement du système informatique (1), dans lequel le contenu de la mémoire de celui-ci indique si une interruption de la tension secondaire de fonctionnement et de veille était volontaire ou s'il s'agit d'une interruption involontaire de la tension secondaire de fonctionnement et de veille;
dans lequel
- le système informatique (1) est adapté, dans un premier état de fonctionnement, à alimenter l'au moins un processeur (4) avec l'au moins une tension de fonctionnement secondaire;
- le système informatique (1) est en outre adapté à séparer l'au moins un processeur (4), dans un deuxième état de fonctionnement, de l'au moins une tension de fonctionnement secondaire, et à alimenter le microcontrôleur (5) avec l'au moins une tension de veille secondaire;
- de plus, le système informatique (1) est également adapté a séparer l'au moins un processeur (4), dans un troisième état de fonctionnement, de l'au moins une tension de fonctionnement secondaire, et à séparer le microcontrôleur (5) de l'au moins une tension de veille secondaire et
- le microcontrôleur (5) est adapté à lire l'information concernant l'interruption de l'au moins une tension de fonctionnement du système informatique (1) de la mémoire (6) lorsque l'au moins une tension de veille secondaire est appliquée au microcontrôleur (5) et, dans le cas d'une interruption volontaire, pour commuter le système informatique (1), dépendant des informations lues, en le premier état de fonctionnement après avoir détecté un signal ultérieur de démarrage, et pour exécuter une requête de mémoire dans le cas d'une interruption involontaire, à savoir quel état de fonctionnement soit ensuite être adopté.

2. Le système informatique (1) selon la revendication 1, **caractérisé en ce que**
le premier état de fonctionnement correspond à un état actif avec une première consommation énergétique, le deuxième état de fonctionnement correspond à un état de veille avec une deuxième consommation énergétique réduite en comparaison avec la première consommation énergétique, et le troisième état de fonctionnement correspond à un mode deep sleep avec une troisième consommation énergétique réduite en comparaison avec la deuxième consommation énergétique.

3. Le système informatique (1) selon les revendications 1 ou 2, **caractérisé en ce que**
la mémoire (6) comprend une bascule bistable qui est alimentée avec une tension de maintien venant de l'unité d'alimentation électrique (2) dans le premier, deuxième et troisième état de fonctionnement, dans lequel un premier état de la bascule bistable indique que le système informatique (1) a subi une interruption de la tension de veille secondaire.

4. Le système informatique (1) selon la revendication 3, **caractérisé en ce que**
la bascule bistable, après une interruption de la tension de maintien, adopte un deuxième état prédéterminé, dans lequel le deuxième état de la bascule bistable indique que le système informatique (1) a subi une interruption de la tension d'alimentation primaire.

5. Le système informatique (1) selon une des revendications 1 ou 2, **caractérisé en ce que**
la mémoire (6) est une mémoire non volatile, notamment une mémoire flash ou une mémoire EEPROM.

6. Le système informatique (1) selon une des revendications 1 à 5, **caractérisé en ce que**
le système informatique (1) comprend en outre un module de mémoire non volatile pour stocker un code de programme exécutable, dans lequel le code de programme comprend une routine pour choisir un état parmi une pluralité d'états de fonctionnement possibles du système informatique (1).

7. Un procédé pour faire fonctionner un système informatique, comprenant au moins un processeur (4), un microcontrôleur (5) et une mémoire (6), dans lequel le système informatique (1) est adapté , dans un premier état de fonctionnement, à alimenter l'au moins un processeur (4) avec l'au moins une tension de fonctionnement secondaire, pour séparer l'au moins un processeur (4), dans un deuxième état de fonctionnement, de l'au moins une tension de fonctionnement secondaire, et pour alimenter le microcontrôleur (5) avec l'au moins une tension de veille secondaire, et dans un troisième état de fonctionnement, pour séparer l'au moins un processeur (4) de l'au moins une tension de fonctionnement secondaire et pour séparer le microcontrôleur (5) de l'au moins une tension de veille secondaire, dans lequel le procédé comprend au moins les étapes suivantes:
- le stockage d'informations concernant une interruption d'au moins une tension de fonctionnement du système informatique (1), dans lequel un contenu de la mémoire indique si une interruption de la tension secondaire de fonctionnement et de veille était volontaire ou s'il s'agit d'une interruption involontaire de la tension secondaire de fonctionnement et de veille;
- la reconnaissance qu'au moins une tension de veille secondaire a été appliquée à un microcontrôleur (5);
- la lecture de l'information concernant l'interruption de l'au moins une tension de fonctionnement du système informatique (1) par le microcontrôleur (5) et
- commuter, de manière sélective, le système informatique (1) dans le premier état de fonctionnement, ce qui dépend des informations lues de la mémoire (6) par le microcontrôleur (5), dans lequel le système informatique est commutée dans le premier état de fonctionnement dans le cas d'une interruption volontaire en détectant un signal ultérieur de démarrage, et une requête de mémoire qui demande quel état de fonctionnement doit être ensuite adopté est exécutée par le microcontrôleur dans le cas d'une interruption involontaire.
